Europäisches Patentamt

European Patent Office

Office européen des brevets

(19)

(11) Veröffentlichungsnummer: **0 097 724**
**B1**

(12) # EUROPÄISCHE PATENTSCHRIFT

(45) Veröffentlichungstag der Patentschrift:
02.10.85

(21) Anmeldenummer: 82104843.6

(22) Anmeldetag: 03.06.82

(51) Int. Cl.⁴: **H 04 N 1/38**

(54) **Abtastverfahren und Abtasteinrichtung.**

(43) Veröffentlichungstag der Anmeldung:
**11.01.84 Patentblatt 84/2**

(45) Bekanntmachung des Hinweises auf die Patenterteilung:
**02.10.85 Patentblatt 85/40**

(84) Benannte Vertragsstaaten:
**AT BE CH DE FR GB IT LI NL SE**

(56) Entgegenhaltungen:
**EP - A - 0 064 736**
**DE - A - 2 356 271**
**DE - A - 2 423 340**
**DE - A - 2 451 570**
**DE - A - 2 748 325**

(73) Patentinhaber: **DR.-ING. RUDOLF HELL GmbH,**
**Grenzstrasse 1-5, D-2300 Kiel 14 (DE)**

(72) Erfinder: **Jürgensen, Heinrich, Dütschfeldredder 22,**
**D-2301 Raisdorf (DE)**
Erfinder: **Zelenka, Thomas, Turnstrasse 4,**
**D-2300 Kiel 14 (DE)**

## Beschreibung

Die Erfindung betrifft ein Verfahren zur optoelektronischen Abtastung von Vorlagen, welche auf einem lichtdurchlässigen Vorlagenträger angeordnet sind, sowie eine Abtasteinrichtung für Flachbett- oder Trommel-Abtastgeräte.

Flachbett- oder Trommel-Abtastgeräte finden z. B. in der Faksimile-Übertragungstechnik Anwendung. Ein Lichtstrahl tastet die zu reproduzierende Vorlage bildpunkt- und zeilenweise ab. Das von der Vorlage kommende Abtastlicht fällt auf ein optoelektronisches Abtastorgan und wird dort in ein Bildsignal umgewandelt. Das Bildsignal wird über einen Übertragungskanal an eine Faksimile-Aufzeichnungseinrichtung übermittelt, in der die Reproduktion der Vorlage aufgezeichnet wird.

Bei den montierten Vorlagen, sogenannten Klebemontagen, handelt es sich um eine Vielzahl von Einzelvorlagen für Schrift und Bild, die auf einem Vorlagenträger zu einer Gesamtseite montiert wurden. Die Einzelvorlagen können entweder Aufsichts-Vorlagen oder Durchsichts-Vorlagen sein, und die Klebemontagen werden entsprechend in Aufsicht oder in Durchsicht abgetastet.

Bei der Abtastung von Montagekanten der Einzelvorlagen, auch Schattenkanten genannt, aber auch bei Kratzern in den Vorlagen wird das Abtastlicht diffus mit einer unsymmetrischen Intensitätsverteilung reflektiert bzw. durchgelassen, was bei nahezu punktförmiger Lichtmessung durch das Abtastorgan zu einer Fehlmessung und damit zu einem Amplitudenfehler im Bildsignal führt. Aufgrund solcher Amplitudenfehler werden Montage- oder Schattenkanten bei der Aufzeichnung der Klebemontagen als störende schwarze Ränder wiedergegeben.

Es ist bekannt, Klebemontagen entweder mit zwei Lichtquellen, die links und rechts der Abtastzeile angeordnet sind, zu beleuchten oder das Abtastlicht mit zwei links und rechts der Abtastzeile angeordneten optoelektronischen Wandlern aufzunehmen. Durch diese Maßnahmen können die Amplitudenfehler zwar reduziert, aber nicht beseitigt werden.

Aus der DE-AI-2 356 271 ist ein weiteres Verfahren zur Beseitigung solcher Amplitudenfehler bekannt. Bei diesem bekannten Verfahren werden die Montage- oder Schattenkanten durch Übermalen mit einer fluoreszierenden Farbe auf der Klebemontage nach Art einer Maskierung markiert. Während der Reproduktion wird durch bildpunktweise Abtastung der Klebemontage mit einem herkömmlichen Abtaster mit einer Bildpunkt-Blende ein Bildsignal gewonnen. Gleichzeitig tastet ein zweiter, spezieller Abtaster mit einer vergrößerten Umfeld-Blende die entsprechenden Markierungen ab und erzeugt ein Steuersignal, das jeweils nur für die Abtastzeit der Markierungen bzw. Montagekanten erscheint. Das Steuersignal betätigt einen elektronischen Umschalter, der jeweils in den für die Abtastung der Montagekanten benötigten Zeitintervallen anstelle des Bildsignals einen vorgegebenen Wert zu einem Aufzeichnungsorgan durchschaltet. Dieses Verfahren ist wegen der zusätzlichen Maskenherstellung aufwendig und zeitraubend. Da das Bildsignal jeweils in den Zeitintervallen durch einen Festwert und nicht durch den tatsächlich abgetasteten Bildsignalwert außerhalb der Zeitintervalle ersetzt wird, lassen sich die Amplitudenfehler nicht vollständig beseitigen.

Weiterhin ist aus der EP-AI 0 064 736 und der EP-AI 0 065 242 bekannt, Abtastorgane mit Lichtaufnahme-Vorrichtungen zu verwenden, welche das unsymmetrische Abtastlicht unter einem möglichst großen Raumwinkel sammeln und einem optoelektronischen Wandler zuführen. Auch mit derartigen Lichtaufnahme-Vorrichtungen lassen sich die Amplitudenfehler nur reduzieren, aber nicht ganz vermeiden.

Aufgabe der vorliegenden Erfindung ist es daher, zur Vermeidung der genannten Nachteile ein Verfahren und eine Abtasteinrichtung für Aufsichts- oder Durchsichts-Vorlagen, insbesondere von Klebemontagen, anzugeben, mit denen Amplitudenfehler im Bildsignal aufgrund von Montagekanten, Kratzern usw. vermieden werden, und mit denen somit eine höhere Reproduktionsqualität erzielt wird. Die Abtasteinrichtung soll sowohl für Flachbett- als auch für Trommel-Abtastgeräte anwendbar sein.

Diese Aufgabe wird bezüglich des Verfahrens durch die in den Patentansprüchen 1 und 2 und bezüglich der Abtasteinrichtung durch die im Patentanspruch 6 angegebenen Merkmale gelöst.

Vorteilhafte Weiterbildungen sind in den Unteransprüchen angegeben.

Die Erfindung wird im folgenden anhand der Fig. 1 bis 7 erläutert.

Es zeigt

Fig. 1 ein Ausführungsbeispiel einer Abtasteinrichtung bei einem Flachbett-Abtastgerät;

Fig. 2 ein Ausführungsbeispiel für eine Kompensations-Schaltung für Amplitudenfehler;

Fig. 3 eine grafische Darstellung zur Aufsichts-Abtastung;

Fig. 4 eine grafische Darstellung zur Durchsichts-Abtastung;

Fig. 5 ein weiteres Ausführungsbeispiel für eine Abtasteinrichtung;

Fig. 6 ein weiteres Ausführungsbeispiel für eine Kompensations-Schaltung und

Fig. 7 eine weitere grafische Darstellung.

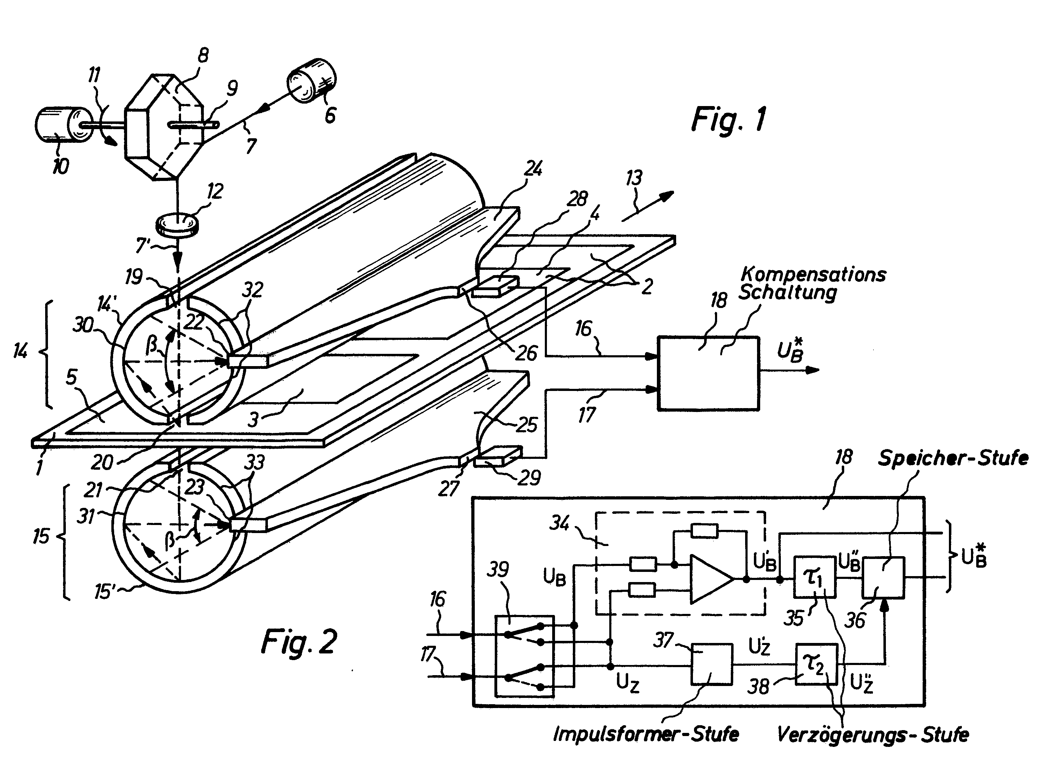

Fig. 1 zeigt ein vorteilahftes Ausführungsbeispiel einer Abtasteinrichtung für insbesondere Klebemontagen bei einem Flachbett-Abtastgerät.

Auf einem beweglichen, transparent ausgebildeten Abtasttisch 1 ist die zu reproduzierende Klebemontage 2 angeordnet. Bei der Klebemontage 2 handelt es sich um Einzelvorlagen 3 und 4 für Schrift und Bild, die beispielsweise mit Hilfe von Hartwachs auf einem lichtdurchlässigen Vorlagenträger 5 zu einer Gesamtseite montiert wurden. Der Vorlagenträger 5 kann eine Klarsichtfolie mit einem hohen Transmissionsgrad, aber auch ein dünnes Papier mit einem relativ geringen Transmissionsgrad sein. Bei den Einzelvorlagen 3 und 4 kann es sich entweder um Aufsichts-Vorlagen oder aber um Durchsichts-Vorlagen handeln.

Eine Lichtquelle 6, z. B. ein Laser, erzeugt einen Lichtstrahl 7, der auf einen Vielflächen-Drehspiegel 8 fällt. Die Drehachse 9 des Vielflächen-Drehspiegels 8 ist senkrecht zur optischen Achse des Lichtstrahls 7 ausgerichtet. Ein Motor 10 treibt den Vielflächen-Drehspiegel 8 mit konstanter Winkelgeschwindigkeit in Richtung eines Pfeiles 11 an. Durch die Rotation des Vielflächen-Drehspiegels 8 wird der von der Lichtquelle 6 ausgehende Lichtstrahl 7 von den einzelnen Spiegelflächen reflektiert und durch ein Objektiv 12 laufend in Zeilenrichtung 13 über die Klebemontage 2 ausgelenkt. Gleichzeitig führt der Abtasttisch 1 eine schrittweise oder kontinuierliche Vorschubbewegung senkrecht zur Zeilenrichtung 13 aus, wodurch die Klebemontage 2 punktweise in nebeneinanderliegenden Zeilen abgetastet wird.

Auf der der Lichtquelle 6 zugewandten Seite des Abtasttisches 1 ist ein erster optoelektronischer Abtaster 14 und auf der gegenüberliegenden Seite ein zweiter optoelektronischer Abtaster 15 angeordnet. Der erste Abtaster 14 nimmt das von der Klebemontage 2 reflektierte Abtastlicht auf und erzeugt ein erstes Abtastsignal auf einer Leitung 16, der zweite Abtaster 15 empfängt das durchgelassene Abtastlicht und erzeugt ein zweites Abtastsignal auf einer Leitung 17.

Erstes und zweites Abtastsignal gelangen über die Leitungen 16 und 17 in eine Kompensations-Schaltung 18 für Amplitudenfehler im Bildsignal aufgrund von Montage- oder Schattenkanten sowie aufgrund von Kratzern. Die Kompensations-Schaltung 18 erzeugt das korrigierte Bildsignal $U_B^*$ zur Übertragung an ein nicht dargestelltes Faksimile-Aufzeichnungsgerät.

Die Abtaster 14 und 15 können Fotodiodenstreifen sein, die sich über die Zeilenlänge erstrecken, aber auch diskrete Fotodioden oder Fotomultiplier, welche mit dem Lichtstrahl in Zeilenrichtung mitgeführt werden.

Im Ausführungsbeispiel sind die Abtaster 14 und 15 in vorteilhafter Weise als ortsfeste Lichtaufnahme-Vorrichtungen etwa in Form von Hohlzylindern mit in Zeilenrichtung ausgerichteten, schlitzförmigen Öffnungen ausgebildet.

Die Lichtaufnahme-Vorrichtung 14 des oberen Abtasters 14 weist eine Lichteintritts-Öffnung 19 für den Abtaststrahl 7' und eine dem Abtasttisch 1 zugewandte Lichtdurchtritts-Öffnung 20 für den Abtaststrahl 7' und das von der Vorlage reflektierte Abtastlicht auf. Die Lichtaufnahme-Vorrichtung 15' des unteren Abtasters 15 hat dagegen nur eine dem Abtasttisch 1 zugewandte Lichteintritts-Öffnung 21 für das von der Klebemontage 2 durchgelassene Abtastlicht. Beide Lichtaufnahme-Vorrichtungen 14' und 15' haben außerdem Lichtaufnahmeflächen 22 und 23, welche von denjenigen Flächen optischer Querschnittswandler 24 und 25 gebildet werden, die die größte Ausdehnung aufweisen. Die optischen Querschnittswandler 24 und 25 sind aus einer Vielzahl von Lichtleitfasern aufgebaut. Die Flächen 26 und 27 der optischen Querschnittswandler 24 und 25 mit den kleineren Ausdehnungen sind an optoelektronische Wandler 28 und 29, z. B. an Fotomultiplier angeschlossen, welche die Abtastsignale auf den Leitungen 16 und 17 erzeugen.

Die den Lichtaufnahmeflächen 22 und 23 gegenüberliegenden Innenflächen der Lichtaufnahme-Vorrichtungen 14' und 15' sind als diffuse Reflektoren 30 und 31 ausgebildet, und zwar jeweils in dem Bereich, der vom Öffnungswinkel der Lichtleitfasern begrenzt wird, aus denen die Querschnittswandler 24 und 25 bestehen.

Dabei wird nur unter dem Öffnungswinkel auf die Endflächen der Lichtleitfasern treffendes Licht an die optoelektronischen Wandler 28 und 29 transportiert.

Die übrigen Innenflächen der Lichtaufnahme-Vorrichtungen 14' und 15' sind als Spiegel 32 und 33 ausgbildet. Alternativ können auch die gesamten Innenflächen der Lichtaufnahme-Vorrichtungen 14' und 15' diffus reflektierend sein.

Form und Abstand der Reflektoren 30 und 31 sind so gewählt, daß möglichst ein großer Anteil des von ihnen diffus reflektierten Lichtes innerhalb des Öffnungswinkels auf die Lichtaufnahmeflächen 22 und 23 fällt. Das von den Reflektoren 30 und 31 kommende diffuse Licht, welches nicht unmittelbar die Lichtaufnahmeflächen 22 und 23 trifft, wird von den Spiegeln 32 und 33 nahezu verlustfrei auf die Reflektoren 30 und 31 zurückgeleitet und erneut diffus in Richtung der Lichtaufnahmeflächen 22 und 23 reflektiert. Lichtaufnahmefläche 22 und Durchtritts-Öffnung 20 einerseits und Lichtaufnahmefläche 23 und Lichteintritts-Öffnung 21 andererseits liegen derart zueinander, daß kein von der Klebemontage 2 kommendes Abtastlicht direkt auf die Lichtaufnahmeflächen 22 bzw. 23 gelangt, sondern mindestens einmal an den Reflektoren 30 und 31 diffus reflektiert wird. Die Lichteintritts-Öffnung 19 der Lichtaufnahme-Vorrichtung 14' ist zweckmäßigerweise so groß gewählt, daß das von einer glänzenden Vorlagenoberfläche zurückgespiegelte, unmodulierte Abtastlicht direkt aus der Lichteintritts-Öffnung 19 wieder austritt und unberücksichtigt bleibt.

Die Verwendung solcher Lichtaufnahme-Vorrichtungen 14' und 15' hat folgende Vorteile.

Durch die beschriebene Anordnung on Reflektoren 30 und 31 und Spiegeln 32 und 33 gelangt ein großer Teil des von der Klebemontge 2 kommenden Abtastlichtes auf die Lichtaufnahmeflächen 22 bzw. 23 und über die Querschnittswandler 24 und 25 an die optoelektronischen Wandler 28 und 29. Die Lichtaufnahme-Vorrichtungen 14' und 15' haben somit einen hohen Wirkungsgrad, so daß die den abtastenden Lichtstrahl 7 erzeugende Lichtquelle 6 eine geringere Leistung aufweisen kann.

Durch den großen Anteil an Abtastlicht, der auf die optoelektronischen Wandler 28 und 29 gelangt, und durch die diffuse Reflektion an den Reflektoren 30 und 31 wird der volle Öffnungswinkel der Lichtleitfasern genutzt und der störende Einfluß von Kratzern und Schattenkanten in der Klebemontage bereits reduziert. Da sich das von den Reflektoren 30 und 31 ausgehende Streulicht auch in Längsausdehnung der Lichtaufnahmeflächen 22 und 23 ausbreitet, werden an dem Lichttransport zu den optoelektronischen Wandlern 28 und 29 eine Vielzahl von lichtleitfasern beteiligt, wodurch die ungleiche Übertragungseigenschaft der einzelnen Lichtleitfasern in vorteilhafter Weise eliminiert und eine hohe Gleichförmigkeit der Abtastung erzielt wird.

Fig. 2 zeigt ein Ausführungsbeispiel einer Kompensations-Schaltung. Die Kompensations-Schaltung 18 besteht aus einer Addier-Stufe 34, einer Verzögerungs-Stufe 35 und einer Speicher-Stufe 36, z. B. in Form einer Sample-and-Hold-Schaltung im Signalweg eines Bildsignals $U_B$, sowie einer Impulsformer-Stufe 37 und einer monostabilen Kippstufe 38 im Signalweg eines Erkennungssignals $U_Z$ für diejenigen Vorlagenstellen, an denen Amplitudenfehler, im Bildsignal $U_Z$ aufgrund von Streulicht und/oder Abschattungen auftreten. Außerdem ist ein Umschalter 39 vorgesehen, welcher je nach Art der Abtastung (Aufsicht/Durchsicht) dafür sorgt, daß das Bildsignal $U_B$ auf die Addier-Stufe 34 und das Erkennungssignal $U_Z$ auf die Impulsformer-Stufe 37 umgeschaltet wird.

Bei Aufsichts-Abtastung der Klebemontage 2 befindet sich der Umschalter 39 in der dargestellten Position. Der obere Abtaster 14 liefert die eigentliche Bildinformation, und das erste Abtastsignal ist das Bildsignal $U_B$, während der untere Abtaster 15 die zusätzliche Information erzeugt und das zweite Abtastsignal das Erkennungssignal $U_Z$ ist. Bildsignal $U_B$ und Erkennzungssignal $U_Z$ werden in der Addier-Stufe 34 summiert, das dabei erhaltene modifizierte Bildsignal $U_B'$ wird in der Verzögerungs-Stufe 35 um eine Zeit $\tau_1$ verzögert und als Bildsignal $U_B''$ der Speicher-Stufe 36 zugeführt. In der Impulsformer-Stufe 37 wird jeder Signalsprung des Erkennungssignals $U_Z$ in einen Triggerimpuls $U_Z'$ umgewandelt, welcher die monostabile Kippstufe 38 triggert. Die Kippstufe 38 erzeugt jeweils beginnend mit dem Triggerimpuls $U_Z'$ für die Dauer $\tau_2$ einen Steuerimpuls $U_Z''$ für die Speicher-Stufe 36. Wie noch gezeigt wird, hat die Speicher-Stufe 36 die Aufgabe, zur Unterdrückung von Schattenkanten den zum Zeitpunkt des Triggerimpulses $U_Z'$ an der Speicher-Stufe 36 anstehenden Bildsignalwert $U_B''$ für die Dauer $\tau_2$ aufrechtzuerhalten und als korrigiertes Bildsignal $U_B^*$ weiterzugeben, auch dann, wenn sich der an der Speicher-Stufe 36 anstehende Bildsignalwert inzwischen geändert hat.

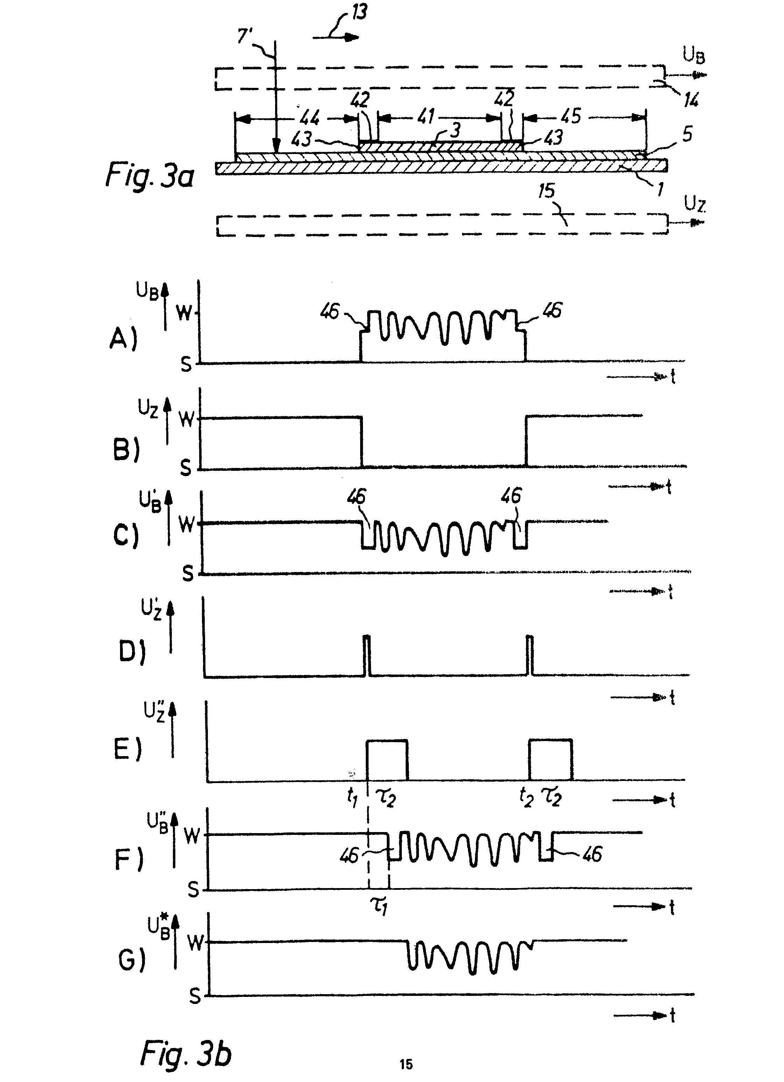

Bei Aufsichts-Abtastung der Klebemontage ist die Addition von Bildsignal $U_B$ und Erkennungssignal $U_Z$ besonders dann von Vorteil, wenn der Vorlagenträger transparent ist. Andernfalls entfällt die Signaladdition. Die Wirkungsweise der Kompensations-Schaltung 18 bei Aufsichts-Abtastung wird anhand der Fig. 3 erläutert.

Fig. 3a zeigt ein Schnittbild in Zeilenrichtung 13 durch den transparenten Abtasttisch 1 und durch die darauf befindliche Klebemontage, die im dargestellten Beispiel aus dem transparenten Vorlagenträger 5 (Klarsicht-Folie) und einer auf dem Vorlagenträger 5 montierten Aufsichts-Vorlage 3 besteht. Der Vorlagenträger 5 kann aber auch lediglich geringfügig lichtdurchlässig (streuenddurchlässig) sein, was beispielsweise bei weißem Papier der Fall ist. Der informationstragende Teil 41 der Aufsichts-Vorlage 3 möge durch einen weißen Rand 42 umrandet sein. Die Aufsichts-Vorlage 3 weist Montagekanten oder Schattenkanten 43 auf. Außerdem ist der obere Abtaster 14 und der untere Abtaster 15 sowie der abtastende Lichtstrahl 7' angedeutet, der sich in Zeilenrichtung 13 über die Klebemontage hinwegbewegen möge.

Fig 3b zeigt die bei Abtastung der Klebemontage in Zeilenrichtung 13 entstehenden Signalverläufe in Diagrammen A) bis G).

Im Diagramm A) ist das vom oberen Abtaster 14 gewonnene Bildsignal $U_B$, welches bei Aufsichts-Abtastung die eigentliche Bildinformation liefert, dargestellt. Im Diagramm B) erscheint das vom unteren Abtaster 15 erzeugte Erkennungssignal $U_Z$.

Das Diagramm C) zeigt zunächst die Addition des Bildsignals $U_B$ und des Erkennungssignals $U_Z$ in der Addier-Stufe 34 der Kompensations-Schaltung 18, um das modifizierte Bildsignal $U_B'$ zu erhalten. Durch die Addition wird zunächst in vorteilhafter Weise erreicht, daß die außerhalb der Aufsichts-Vorlage 3 liegenden Bereiche 44 und 45 des Vorlagenträgers 5 als »Weiß« wiedergegeben werden. Allerdings sind die Signaleinbrüche 46 noch vorhanden, welche bei der Wiederaufzeichnung »Schwarz« oder als Schatten erscheinen würden.

Im Diagramm D) sind die in der Impulsformer-Stufe 37 erzeugten Triggerimpulse $U_Z'$ dargestellt, welche jeweils bei einem Wechsel von Aufsicht auf Durchsicht oder umgekehrt auftreten und das eventuelle Vorhandensein von Schattenkanten signalisieren. Das Diagramm E) zeigt die in der monostabilen Kippstufe gewonnenen Steuerimpulse $U_Z''$ der Dauer $\tau_2$.

Diagramm F) zeigt das in der Verzögerungs-Stufe 35 um die Zeitdauer $\tau_1$ verzögerte Bildsignal $U_B'$, welches der Speicher-Stufe 36 zugeführt wird.

Diagramm G) zeigt das Ergebnis der Schattenkanten-Unterdrückung mit Hilfe der Speicher-Stufe 36 anhand des Bildsignals $U_B^*$, welches schließlich zur Aufzeichnung gelangt. Die Speicher-Stufe 36 hat die beim Auftreten der Schattenkanten zu den Zeitpunkten $t_1$ und $t_2$ gewonnenen Bildsignalwerte »Weiß« jeweils für die

Dauer $\tau_2$ der Steuerimpulse $U_Z''$ festgehalten, wodurch in vorteilhafter Weise die Signaleinbrüche 46 im Bildsignal $U_B$ eliminiert und somit die Schattenkanten unterdrückt wurden.

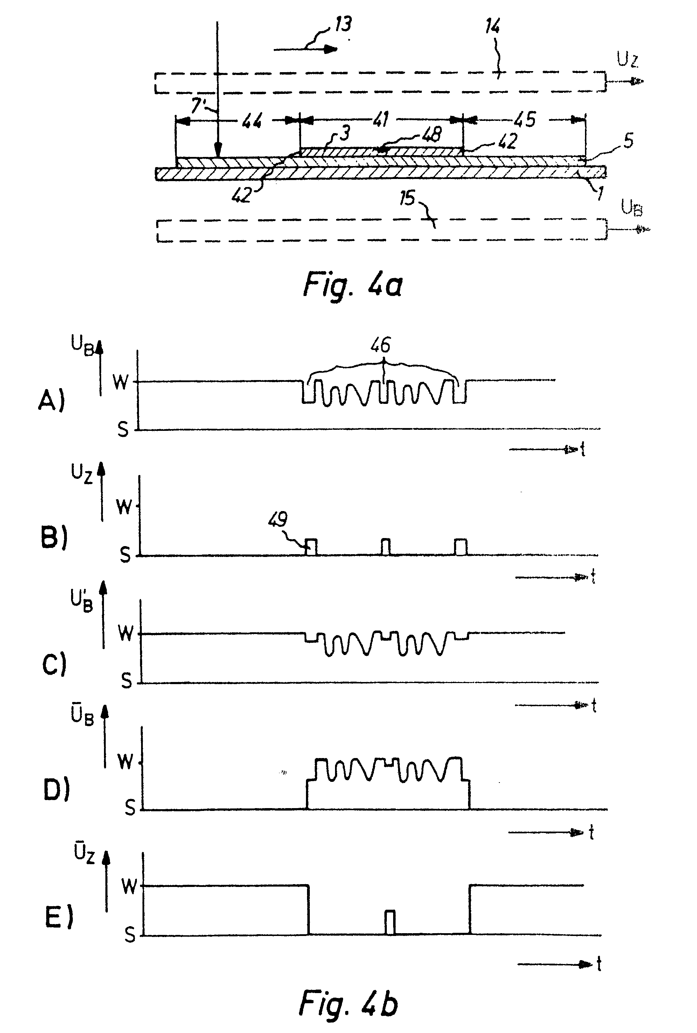

Bei Durchsichts-Abtastung befindet sich der Umschalter 39 in der gestrichelt dargestellten Position. Der obere Abtaster 14 liefert die Zusatzinformation, und das erste Abtastsignal ist das Erkennzungssignal $U_Z$. Der untere Abtaster 15 liefert die eigentliche Bildinformation, und das zweite Abtastsignal ist das Bildsignal $U_B$. Die Wirkungsweise der Kompensations-Schaltung 18 bei Durchsichts-Abtastung wird anhand der grafischen Darstellung in Fig. 4 erläutert.

Fig. 4a zeigt wiederum ein Schnittbild in Zeilenrichtung 13 durch den transparenten Abtasttisch 1 und der darauf befindlichen Klebemontage. Der Unterschied zu Fig. 3a besteht darin, daß jetzt eine Durchsichts-Vorlage 3 auf dem lichtdurchlässigen Vorlagenträger 5 aufgebracht ist. Die Durchsichts-Vorlage möge außerdem noch einen Kratzer 48 aufweisen.

Fig. 4b zeigt die bei Durchsichts-Abtastung der Klebemontage in Zeilenrichtung 13 entstehenden Signalverläufe in Diagrammen A) bis E).

Im Diagramm A) ist das im unteren Abtaster 15 erzeugte Bildsignal $U_B$ und im Diagramm B) das im oberen Abtaster 14 gewonnene Erkennungssignal $U_Z$ dargestellt.

Bei Abtastung der Bereiche 44 und 45 der Klebemontage gelangt alles Abtastlicht direkt durch den transparenten Vorlagenträger 5 auf den unteren Abtaster 15, und es wird kein Abtastlicht in Richtung des oberen Abtasters 14 reflektiert. Das Bildsignal $U_B$ liegt auf dem Weiß-Pegel und das Erkennungssignal $U_Z$ auf dem Schwarz-Pegel. Bei Abtastung des informationstragenden Teils 41 der Durchsichts-Vorlage 3 gelangt lediglich Abtastlicht an den unteren Abtaster 15. Bei Abtastung der Schattenkanten 42 und des Kratzers 48 wird das Abtastlicht gestreut, ein geringerer Anteil gelangt an den unteren Abtaster 15, und die Folge sind wiederum Signaleinbrüche 46 im Bildsignal $U_B$. Gleichzeitig wird aber auch an den Schattenkanten 42 und am Kratzer 48 Abtastlicht in Richtung des oberen Abtasters 14 reflektiert, welcher das empfangene Abtastlicht in Spannungsimpulse 49 des Erkennungssignals $U_Z$ umsetzt.

Diagramm C) zeigt die Addition von Bildsignal $U_B$ und Erkennungssignal $U_Z$ in der Addier-Stufe 34 der Kompensations-Schaltung 18, um das Bildsignal $U_B'$ zu erhalten.

Man erkennt, daß die im Bildsignal $U_B$ auftretenden großen Signaleinbrüche 46 durch die Signaladdition im Bildsignal $U_B'$ bereits erheblich reduziert sind. Wenn dafür Sorge getragen wird, daß die Spannungsimpulse 49 des Erkennungssignals $U_Z$ amplitudenmäßig etwa gleich der Höhe der Signalumbrüche 46 sind, lassen diese sich nahezu ganz eliminieren. In diesem Fall kann bereits das Ausgangssignal $U_B$ der Addier-Stufe 34 als korrigiertes Bildsignal $U_B^*$ verwendet werden, wie dies in Fig. 2 angedeutet ist.

Um eine vollständige Schattenkanten-Unterdrückung zu erreichen, können die nicht mit Vorlagen bedeckten Bereiche 44 und 45 des Vorlagenträgers 5 mit einer weißen Folie abgedeckt werden. In diesem Falle entsteht ein modifiziertes Bildsignal $\bar{U}_B$ und ein modifiziertes Erkennungssignal $\bar{U}_Z$, welche in den Diagrammen D) und E) dargestellt sind und mit den Diagrammen A) und B) der Fig. 3b für Aufsichts-Abtastung übereinstimmen. Ausgehend von diesen Signalen kann, wie in Fig. 3b dargelegt, auch bei Durchsichts-Abtastung eine entsprechende Schattenkantenunterdrückung mit Hilfe der Speicher-Stufe 36 durchgeführt werden.

Wenn eine Klebemontage sowohl aus Strich-Vorlagen (Schriften, Strichzeichnungen usw.) als auch aus Halbton-Vorlagen (Bilder) zusammengesetzt ist, besteht oft die Notwendigkeit, das von einer Strich-Vorlage stammende Bildsignal von dem Bildsignal einer Halbton-Vorlage zu unterscheiden, weil z. B. Strich-Vorlagen als Strich-Aufzeichnung, Halbton-Vorlagen dagegen gerastert aufgezeichnet werden sollen. In diesem Falle kann der das Erkennungssignal $U_Z$ liefernde Abtater 14 (bei Aufsichts-Abtastung) oder der Abtaster 15 (bei Durchsichts-Abtastung) in vorteilhafter Weise dazu verwendet werden, ein Erkennungssignal für »Strich« oder »Halbton« zu erzeugen. Dazu werden beispielsweise in Zeilenrichtung 13 vor der zu kennzeichnenden Vorlage eine Marke auf den Vorlagenträger 5 aufgebracht, welche von dem entsprechenden Abtaster abgetastet wird, um ein entsprechendes Erkennungssignal zu gewinnen.

Im Falle, daß die Bildinformationen der verschiedenen Vorlagen der Klebemontage in separaten Speichern oder in separaten Bereichen eines Speichers abgelegt werden sollen, läßt sich in vorteilhafter Weise für jede Vorlage ein Erkennungssignal erzeugen, indem die Marken mit einem Balkencode versehen werden, welcher vom Abtaster gelesen und ausgewertet wird. Der Balkencode wird ebenfalls gespeichert und erleichtert das Auffinden der Bildinformationen der einzelnen Vorlagen im Speicher.

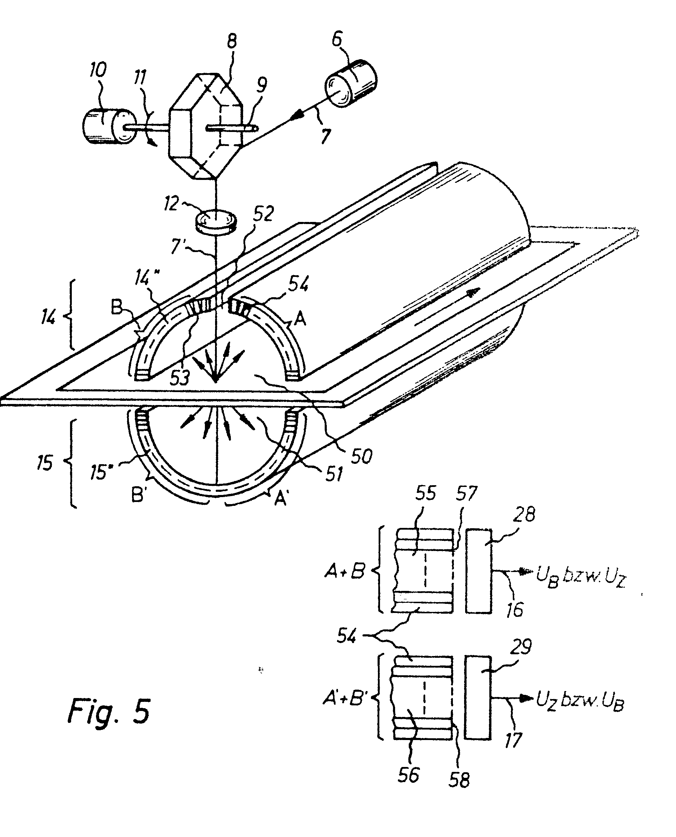

Fig. 5 zeigt ein weiteres Ausführungsbeispiel der Abtasteinrichtung, bei der die Abtaster 14 und 15 gegenüber der Fig. 1 modifizierte Lichtaufnahme-Vorrichtungen 14'' und 15'' aufweisen.

Die Lichtaufnahme-Vorrichtungen haben etwa die Form von halben Hohlzylindern, deren Licht-Öffnungen 50 und 51 dem Abtasttisch 1 zugewandt sind. Die Lichtaufnahme-Vorrichtung 14'' weist außerdem noch eine Lichteintritts-Öffnung 52 für den Abtaststrahl 7' auf. Die gesamte Innenfläche der Lichtaufnahme-Vorrichtungen 14'' und 15'' sind als Lichtaufnahmeflächen ausgebildet, die wiederum aus einer Vielzahl von Teilflächen 53 bestehen. Die Teilflächen sind im Ausführungsbeispiel die Endflächen 53 von Lichtleitfasern 54, die in der Fig. 5 nicht im Detail und nicht in voller Länge dargestellt sind. Die Lichtleitfasern 54 sind derart angeordnet, daß die Endflächen 53 etwa Tangentialflächen der halben Hohlzylinder bilden. Bei jeder Lichtaufnahme-Vorrichtung sind jeweils sämtliche Lichtleitfasern 54, symbolisiert durch »A« und »B«, zu einem Lichtleitfaser-Bündel 55 bzw. 56 (A+B) zusammengefaßt, wobei die anderen Endflächen der Lichtleitfasern 54 gemeinsam jeweils eine Lichtaustritts-Fläche 57 bzw. 58 für das Abtastlicht bilden. An die Lichtaustritts-Flächen 57 bzw. 58 ist jeweils der optoelektronische Wandler 28 bzw. 29, beispielsweise in Form schneller Foto-Multiplier, optisch angekoppelt, welche das Bildsignal $U_B$ bzw. das Erkennungssignals $U_Z$ auf Leitung 16 oder 17 erzeugen. Alternativ können die Teilflächen 53 auch die Lichteintrittsflächen von Fotodioden sein.

Die bisher beschriebenen Ausführungsformen der Abtast-Einrichtungen sind für Flachbett-Abtastgeräte gedacht und derart gestaltet, daß die Lichtaufnahme-Vorrichtungen sich mindestens über die Länge des Abtasttisches 1 erstrecken, wie aus den Fig. 1 und 5 hervorgeht.

Die Abtasteinrichtungen lassen sich aber auch in vorteilhafter Weise bei Trommel-Abtastgeräten verwenden. In diesem Falle sind die Lichtaufnahme-Vorrichtungen 14'; 15' bzw. 14''; 15'' beispielsweise als Hohlkugel bzw. als Teil einer Hohlkugel mit den in den Fig. 1 und 5 dargestellten Querschnitten ausgebildet. Die Lichtaufnahmeflächen 22 und 23 sind nicht mehr schlitzförmig, sondern kreisförmig oder quadratisch gestaltet. Die Querschnittswandler 24 und 25 entfallen, und die optoelektronischen Wandler 28 und 29 werden direkt in den kreisförmigen oder quadratischen Lichtaufnahmeflächen angeordnet oder über mindestens eine Lichtleitfaser angeschlossen. Bei solchen Trommel-Abtastgeräten befindet sich eine der Lichtaufnahme-Vorrichtungen innerhalb und die andere außerhalb der Abtasttrommel. Die gesamte Abtasteinrichtung bewegt sich dann mit dem abtastenden Lichtstrahl axial an der Abtasttrommel vorbei.

Die Abtasteinrichtungen können selbstverständlich auch für die Abtastung farbiger Klebemontagen verwendet werden. In diem Falle sind bei der in Fig. 1 dargestellten Ausführungsform der Lichtaufnahme-Vorrichtungen 14' und 15' jeweils drei Querschnittswandler 24 und 25 vorgesehen, deren Lichteintrittsflächen insgesamt die Lichtaufnahme-Fläche 22 und 23 der Lichtaufnahme-Vorrichtungen bilden. Die Lichtaustrittsflächen der Querschnittswandler dagegen sind zum Zwecke der Farbtrennung des Abtastlichtes getrennt über drei Farbteiler an drei separate optoelektronische Wandler angekoppelt, welche die drei Farbmeßwertsignale erzeugen.

Bei der in Fig. 5 dargestellten Ausführungsform der Lichtaufnahme-Vorrichtungen 14 und 15 wird das an die optoelektronischen Wandler geführte Lichtleitfaser-Bündel mindestens in drei Einzelbündel aufgespalten, wobei die Lichtleitfaser-Endflächen eines Einzelbündels jeweils eine separate Lichtaustrittsfläche bilden. Die Aufteilung des Lichtleitfaser-Bündels erfolgt in der Weise, daß jeweils ein Tripel von Lichtleitfasern, deren Endflächen in der Lichtaufnahmefläche dicht beieinanderliegen, ausgewählt und jede Lichtleitfaser eiens Tripels einem Einzelbündel zugeordnet wird. Die drei Lichtaustrittsflächen sind zum Zwecke der Farbtrennung des Abtastlichtes ebenfalls über drei Farbteiler an drei separate optoelektronische Wandler angekoppelt, um die drei Farbmeßwertsignale zu erzeugen.

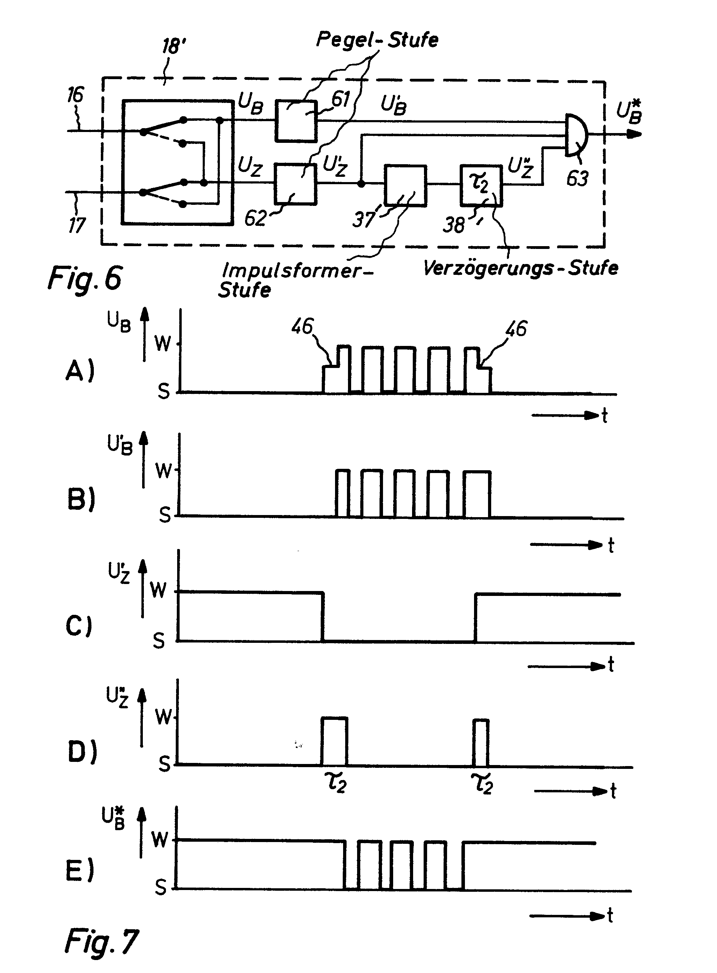

Fig. 6 zeigt ein weiteres Ausführungsbeispiel einer Kompensations-Schaltung 18', die bei Strich-Klebemontagen eingesetzt werden kann. Bildsignal $U_B$ und Erkennungssignal $U_Z$ werden mittels Pegel-Stufen 61 und 62 in Zweipegelsignale $U_B'$ und $U_Z'$ umgewandelt, deren maximale Amplitude dem Weißpegel und deren minimale Amplitude dem Schwarzpegel entspricht. Das Zweipegelsignal $U_Z'$ wird in der Impulsformer-Stufe 37' in einen Triggerimpuls für die Kippstufe 38' umgeformt, welche einen Spannungsimpuls $U_Z''$ der Impulsdauer $\tau_2$ erzeugt. Die Zweipegelsignale $U_B'$ und $U_Z'$ sowie der Spannungsimpuls $U_Z''$ gelangen auf ein ODER-Tor 63, dessen Ausgangssignal das korrigierte Bildsignal $U_B^*$ ist.

Fig. 7 zeigt eine grafische Darstellung zur Erläuterung der Wirkungsweise der Kompensations-Schaltung 18' bei Aufsichts-Abtastung. Im Diagramm A) ist wiederum das Bildsignal $U_B$ mit den Signaleinbrüchen 46 aufgrund von Schattenkanten dargestellt. Diagramm B) zeigt das zweipegelige Bildsignal $U_B'$ und Diagramm C) das zweipeglige Erkennungssingal $U_Z'$ an den Ausgängen der Pegel-Stufen 61 und 62. Im Diagramm D) sind die Spannungsimpulse $U_Z''$ der Impulsdauer $\tau_2$ angedeutet. Diagramm E) zeigt das korrigierte Bildsignal $U_B^*$ am Ausgang des ODER-Tores 63. Man erkennt, daß durch logische ODER-Verknüpfung der Signale die Spannungseinbrüche 46 im Bildsignal $U_B$ eliminiert wurden.

## Patentansprüche

1. Verfahren zur punkt- und zeilenweisen optoelektronischen Abtastung von Aufsichts-Vorlagen, welche auf einem lichtdurchlässigen Vorlagenträger angeordnet sind, dadurch gekennzeichnet, daß

a)    durch gleichzeitige Aufsichts- und Durchsichts-Abtastung zwei Abtastsignale von derselben Vorlagenstelle gewonnen werden, wobei eines der Abtastsignale das eigentliche Bildsignal ($U_B$) der Vorlagen und das andere Abtastsignal ein Erkennungssignal ($U_Z$) für diejenigen Vorlagenstellen ist, an denen Amplitudenfehler im Bildsignal aufgrund von Streulicht und/oder Abschattungen auftreten, und

b)    zur Beseitigung der Amplitudenfehler jeweils der vor Auftreten des Erkennungssignals ($U_Z$) vorhandene Amplitudenwert des Bildsignals ($U_B$) mindestens für die Dauer der Amplitudenfehler aufrechterhalten wird.

2. Verfahren zur punkt- und zeilenweisen optoelektronischen Abtastung von Durchsichts-Vorlagen, welche auf einem lichtdurchlässigen Vorlagenträger angeordnet sind, dadurch gekennzeichnet, daß

a) durch gleichzeitige Aufsichts- und Durchsichts-Abtastung zwei Abtastsignale von derselben Vorlagenstelle gewonnen werden, wobei eines der Abtastsignale das eigentliche Bildsignal ($U_B$) der Vorlagen und das andere Abtastsignal ein Erkennungssignal ($U_Z$) für diejenigen Vorlagenstellen ist, an denen Amplitudenfehler im Bildsignal aufgrund von Streulicht und/oder Abschattungen auftreten, und

b) zur Beseitigung der Amplitudenfehler Bildsignal ($U_B$) und Erkennungssignal ($U_Z$) addiert werden.

3. Verfahren nach Anspruch 1, dadurch gekennzeichnet, daß Bildsignal ($U_B$) und Erkennungssignal ($U_Z$) addiert werden und der Amplitudenwert des Summensignals ($U_B'$ mindestens für die Dauer der Amplitudenfehler aufrechterhalten wird.

4. Verfahren nach Anspruch 2, dadurch gekennzeichnet, daß der vor Auftreten des Erkennungssignals ($U_Z$) vorhandene Amplitudenwert des Summensignals ($U_B'$) mindestens für die Dauer der Amplitudenfehler aufrechterhalten wird.

5. Verfahren zur Abtastung von Strich-Vorlagen nach Anspruch 1, dadurch gekennzeichnet, daß

a) aus dem digitalisierten Erkennungssignals ($U_Z'$) ein digitaler Spannungsimpuls ($U_Z''$) gewonnen wird, der mindestens die Dauer eines Amplitudenfehlers hat, und

b) digitalisiertes Erkennungssignal ($U_Z'$), digitalisiertes Bildsignal ($U_B'$) und digitaler Spannungsimpuls ($U_Z''$) zur Beseitigung der Amplitudenfehler einer ODER-Verknüpfung unterzogen werden.

6. Abtasteinrichtung zur punkt- und zeilenweisen optoelektronischen Abtastung von Vorlagen, welche auf einem lichtdurchlässigen Vorlagenträger (5) angeordnet sind, gekennzeichnet durch

a) einen ersten optoelektronischen Abtaster (14) zur Erzeugung eines ersten Abtastsignals durch Aufsichts-Abtastung, welcher auf dem abtastenden Lichtstrahl (7') zugewandten Seite des Vorlagenträgers (5) angeordnet ist,

b) einen zweiten optoelektronischen Abtaster (15) zur Erzeugung eines zweiten Abtastsignals durch Durchsichts-Abtastung, welcher auf der dem abtastenden Lichtstrahl (7') abgewandten Seite des Vorlagenträgers (5) angeordnet ist (Fig. 1), wobei eines der Abtastsignale das eigentliche Bildsignal ($U_B$) der Vorlagen (2) und das andere Abtastsignal ein Erkennungssignal ($U_Z$) für diejenigen Vorlagenstellen ist, an denen Amplitudenfehler im Bildsignal ($U_B$) aufgrund von Streulicht und/oder Abschattungen auftreten, und

c) eine Kompensations-Schaltung (18) zur Beseitigung der Amplitudenfehler (Fig. 2), welche an die optoelektronischen Abtaster (14; 15) angeschlossen ist.

7. Abtastanordnung nach Anspruch 6, dadurch gekennzeichnet, daß die Kompensations-Schaltung (18) eine Addier-Stufe (34) zur Bildung eines Summensignals ($U_B'$) durch Addition von Bildsignal ($U_B$) und Erkennungssignal ($U_Z$) aufweist.

8. Abtasteinrichtung nach Anspruch 7, dadurch gekennzeichnet, daß die Kompensations-Schaltung (18) außerdem folgende Baugruppen aufweist:

a) eine Verzögerungs-Stufe (35), die an die Addier-Stufe (34) angeschlossen ist, zur Verzögerung des Summensignals ($U_B'$),

b) eine steuerbare Speicher-Stufe (36) für Amplitudenwerte des Summensignals ($U_B'$), die mit der Verzögerungs-Stufe (35) in Verbindung steht, und

c) einen mit dem Erkennungssignal ($U_Z$) beaufschlagten Impulsformer (37; 38) zur Erzeugung von Impulsen ($U_Z''$) einstellbarer Dauer aus dem Erkennungssignal ($U_Z$), welcher an den Steuereingang der Speicher-Stufe (36) angeschlossen ist, wobei die Speicher-Stufe (36) den vor Auftreten des Erkennungssignals ($U_Z$) vorhandenen Amplitudenwert des Summensignals ($U_B'$) für die Dauer des Impulses ($U_Z''$) festhält.

9. Abtasteinrichtung nach Anspruch 8, dadurch gekennzeichnet, daß die Speicher-Stufe (36) als Sample- and Hold-Schaltung ausgebildet ist.

10. Abtasteinrichtung für Strich-Vorlagen nach Anspruch 6, dadurch gekennzeichnet, daß die Kompensations-Schaltung (18') (Fig. 6) folgende Komponenten aufweist:

a) mit dem Bildsignal ($U_B$) und dem Erkennungssignal ($U_Z$) beaufschlagte Pegel-Stufen (61; 62) zur Digitalisierung des Bildsignals ($U_B$) und des Erkennungssignals ($U_Z$),

b) einen an die Pegel-Stufe (62) abgeschlossenen und mit dem digitalisierten Erkennungssignal ($U_Z'$) beaufschlagten Impulsformer (37'; 38') zur Erzeugung von Impulsen ($U_Z''$) einstellbarer Dauer, und

c) ein ODER-Tor (63), welches mit den Pegel-Stufen (61; 62) und mit dem Impulsformer (37'; 38' verbunden ist.

11. Abtasteinrichtung nach einem der Ansprüche 6 bis 10, dadurch gekennzeichnet, daß die Abtaster (14; 15 bzw. 14'; 15') als Lichtaufnahme-Vorrichtungen für das Abtastlicht in Form von reflektierenden Hohlkörpern mit optoelektroni-

schen Wandlern (28; 29) zur Erzeugung der Abtastsignale ausgebildet sind.

12. Abtasteinrichtung nach Anspruch 11, dadurch gekennzeichnet, daß

a) der Hohlkörper eine als Lichtaufnahmefläche dienende Öffnung (22 bzw. 23) und eine Lichteintritts-Öffnung (20 bzw. 21) für das von den Vorlagen (2) kommende Abtastlicht aufweist,

b) die der Lichtaufnahmefläche (22 bzw. 23) gegenüberliegende Innenfläche des Hohlkörpers mindestens in einem von dem Öffnungswinkel ($\beta$) der Lichtaufnahmefläche (22 bzw. 23) überdeckten Bereich als diffus reflektierender erster Reflektor (30 bzw. 31) und die an die Lichtaufnahmefläche (22 bzw. 23) angrenzende Innenfläche als zweiter Reflektor (32 bzw. 33) ausgebildet ist (Fig. 1), wobei

c) die Reflektoren (30; 31; 32; 33) derart zueinander angeordnet sind, daß das auftreffende Licht jeweils auf den gegenüberliegenden Reflektor geleitet wird,

d) der erste Reflektor (30 bzw. 31) so geformt und zur Lichtaufnahmefläche (22 bzw. 23) ausgerichtet ist, daß ein großer Anteil des Streulichtes auf die Lichtaufnahmefläche (22 bzw. 23) fällt, und

e) die Lichteintritts-Öffnung (20 bzw. 21) derart gestaltet und zur Lichtaufnahmefläche (22 bzw. 23) ausgerichtet ist, daß das Abtastlicht nicht direkt auf die Lichtaufnahmefläche (22 bzw. 23) fällt, sondern mindestens einmal von dem ersten Reflektor (30 bzw. 31) diffus reflektiert wird.

13. Abtasteinrichtung nach Anspruch 12, dadurch gekennzeichnet, daß der Hohlkörper für die Aufsichts-Abtastung zusätzlich eine Lichteintritts-Öffnung (19) für den abtastenden Lichtstrahl (7') aufweist.

14. Abtasteinrichtung nach Anspruch 12, dadurch gekennzeichnet, daß der zweite Reflektor (32 bzw. 33) als diffuser Reflektor ausgebildet ist.

15. Abtasteinrichtung nach Anspruch 12, dadurch gekennzeichnet, daß der zweite Reflektor (32 bzw. 33) als Spiegel ausgebildet ist.

16. Abtasteinrichtung nach Anspruch 11, dadurch gekennzeichnet, daß die Lichtaufnahmefläche (22 bzw. 23) von einer Endfläche eines optischen Querschnittswandlers (24 bzw. 25) gebildet wird, an dessen anderer Endfläche der optoelektronische Wandler (28 bzw. 29) angekoppelt ist.

17. Abtasteinrichtung nach Anspruch 11, dadurch gekennzeichnet, daß

a) der Hohlkörper eine Lichteintritts-Öffnung (50 bzw. 52) für das von den Vorlagen (2) kommende Abtastlicht aufweist, und

b) die Innenfläche des Hohlkörpers als Lichtaufnahmefläche (53) ausgebildet ist (Fig. 5).

18. Abtasteinrichtung nach Anspruch 17, dadurch gekennzeichnet, daß

a) die Lichtaufnahmefläche (53) von den einen Endflächen einer Vielzahl von Lichtleitfasern (54) gebildet wird, wobei die Flächennormalen dieser Endflächen in Richtung des ankommenden Abtastlichtes ausgerichtet sind, und

b) die anderen Endflächen (57) der Lichtleitfasern (54) an den optoelektronischen Wandler (28 bzw. 29) angekoppelt sind.

19. Abtasteinrichtung nach Anspruch 11, dadurch gekennzeichnet, daß der Hohlkörper zur Abtastung von ebenen Vorlagenträgern (1) als Hohlzylinder bzw. Teil eines Hohlzylinders ausgebildet ist (Fig. 1 und 5).

20. Abtasteinrichtung nach Anspruch 11, dadurch gekennzeichnet, daß der Hohlkörper zur Abtastung von trommelförmigen Vorlagenträgern als Hohlkugel bzw. Teil einer Hohlkugel ausgebildet ist.

**Claims**

1. Method for dot by dot and line by line optoelectronic scanning of reflective originals which are situated on a light-transmissive original carrier, characterized in that

a) two scanning signals are obtained from the same point of the original by simultaneous reflection and transparency scanning, one of the scanning signals being the actual image signal ($U_B$) of the originals and the other scanning signal being a recognition signal ($U_Z$) for the points of the originals at which amplitude defects arise in the image signal because of stray light and/or shadows, and

b) the amplitude value of the image signal ($U_B$) present before the appearance of the recognition signal ($U_Z$) is maintained at least during the period of the amplitude defects in each case, for elimination of the amplitude defects.

2. Method for dot by dot and line by line optoelectronic scanning of transparency originals which are situated on a light-transmissive original carrier, characterized in that

a) two scanning signals are obtained from the same point of the original by simultaneous reflection and transparency scanning, one of the scanning signals being the actual image signal ($U_B$) of the originals and the other scanning signal being a recognition signal ($U_Z$) for the points of the originals at which amplitude defects arise in the image signal because of stray light and/or shadows, and

b) the image signal ($U_B$) and the recognition signal ($U_Z$) are added for elimination of the amplitude defects.

3. Method according to claim 1, characterized in that the image signal ($U_B$) and the recognition signal ($U_Z$) are added and that the amplitude value of the resultant signal ($U_B'$) is maintained during at least the period of the amplitude defects.

4. Method according to claim 2, characterized in that the amplitude value of the resultant signal ($U_B'$) present before the appearance of the recognition signal ($U_Z$) is maintained during at least the period of the amplitude defects.

5. Method for canning line work pattern originals according to claim 1, characterized in that

a)  a digital voltage pulse ($U_Z''$) which has the duration of at least one amplitude defect is obtained from the digitalized recognition signal ($U_Z'$), and

b)  the digitalized recognition signal ($U_Z'$), the digitalized image signal ($U_B'$) and the digital voltage pulse ($U_Z''$) are subjected to an OR-interconnection for elimination of the amplitude defects.

6. Scanning system for dot by dot and line by line opto-electronic scanning of originals which are situated on a light-transmissive original carrier (5), characterized by

a)  a first opto-electronic scanner (14) for generating a first scanning signal by reflection scanning, which is situated at the side of the original carrier (5) facing towards the scanning light beam (7'),

b)  a second opto-electronic scanner (15) for generating a second scanning signal by transparency scanning, which is situated at the side of the original carrier (5) facing away from the scanning light beam (7') (Fig. 1), one of the scanning signal being the actual image signal ($U_B$) of the originals and the other scanning signal being a recognition signal ($U_Z$) for the points of the originals at which amplitude defects occur in the image signal ($U_B$) because of stray light and/or shadows, and

c)  a compensator circuit (18) for elimination of the amplitude defects (Fig. 2), which is connected to the opto-electronic scanners (14; 15).

7. Scanning system according to claim 6, characterized in that the compensator circuit (18) comprises an adding stage (34) for producing a resultant signal ($U_B'$) by addition of the image signal ($U_B$) and recognition signal ($U_Z$).

8. Scanning system according to claim 7, characterized in that the compensator circuit (18) moreover comprises the following components:

a)  a time-delay stage (35) which is connected to the adding stage (34), for delaying the resultant signal ($U_B'$),

b)  a controllable storage stage (36) for amplitude values of the resultant signal ($U_B'$) which is in communication with the time-delay stage (35), and

c)  a pulse shaper (37; 38) acted upon by the recognition signal ($U_Z$) for generating pulses ($U_Z''$) of adjustable period from the recognition signal ($U_Z$), which is connected to the control input of the storage stage (36), the storage stage (36) retaining the amplitude value of the resultant signal ($U_B'$) present before the appearance of the recognition signal ($U_Z$) during the period of the pulse ($U_Z$).

9. Scanning system according to claim 8, characterized in that the storage stage (36) is constructed as a sample and hold circuit.

10. Scanning system for line work pattern originals aooording to claim 6, characterized in that the compensator circuit (18') (Fig. 6) comprises the following components:

a)  level stages (61; 62) acted upon by the image signal ($U_B$) and the recognition signal ($U_Z$) for digitalization of the image signal ($U_B$) and of the recognition signal ($U_Z$),

b)  a pulse shaper (37', 38') connected to the level stage (62) and acted upon by the digitalized recognition signal ($U_Z'$), for generating pulses ($U_Z''$) of adjustable period, and

c)  an OR gate (63), which is connected of the level stages (61; 62) and to the pulse shaper (37'; 38').

11. Scanning system according to one of the claims 6 to 10, characterized in that the opto-electronic scanners (14; 15 or 14'; 15', respectively) are formed as light pick-up devices for the scanning light in the form of reflective hollow bodies comprising opto-electronic converters (28; 29) for generating the scanning signals.

12. Scanning system according to claim 11, characterized in that

a)  the hollow body has an opening (22, 23, resp.) acting as a light pick-up area and a light inlet opening (20, 21, resp.) for the scanning light coming from the originals,

b)  the inner surface of the hollow body lying opposite to the light pick-up area (22, 23, resp.) is constructed as a first reflector (30, 31, resp.) acting as a diffuse reflector at least in an area covered by the aperture angle ($\beta$) of the light pick-up area (22, 23, resp.), and the inner surface adjacent to the light pick-up area (22, 23, resp.) as a second reflector (32, 33, resp.) (Fig. 1),

c)  the reflectors (30; 31; 32; 33) are so arranged with respect to each other that the impinging light is in each case led to the oppositely situated reflector,

d)  the first reflector (30, 31, resp.) is so formed and aligned with respect to the light pick-up area (22, 23, resp.) that a great proportion of the stray light impinges on the light pick-up area (22, 23, resp.), and

e)  the light inlet opening (20, 21, resp.) is so formed and aligned with respect to the light pick-up area (22, 23, resp.) that the scanning light does not impinge direct on the light pick-up area (22, 23, resp.) but is diffusely reflected at least once by the first reflector (30, 31, resp.).

13. Scanning system according to claim 12, characterized in that the hollow body for the reflection scanning operation complementarily has a light inlet opening (19) for the scanning light beam (7').

14. Scanning system according to claim 12, characterized in that the second reflector (32, 33, resp.) is constructed as a diffuse reflector.

15. Scanning system according to claim 12, characterized in that the second reflector (32, 33, resp.) is constructed as a mirror.

16. Scanning system according to claim 11, characterized in that the light pick-up area (22, 23, resp.) is formed by an end face of an optical cross-section converter (24, 25, resp.) whose other end face has the opto-electronic converter (28, 29, resp.) coupled to it.

17. Scanning system according to claim 11, characterized in that

a) the hollow body has a light inlet opening (50, 52 resp.) for the scanning light coming from the originals (2), and

b) the inner surface of the hollow body is constructed as a light pick-up area (53) (Fig. 5).

18. Scanning system according to claim 17, charaterized in that

a) the light pick-up area (53) is formed by the end faces of a plurality of optical fibres (54), the lines at right angles of these end faces being aligned in the direction of the incident scanning light, and

b) the other end faces (57) of the optical fibres (54) are coupled to the opto-electronic converter (28, 29, resp.).

19. Scanning system according to claim 11, characterized in that the hollow body intended for scanning of plane original carriers (1) is constructed as a hollow cylinder or part of a hollow cylinder (Fig. 1 and 5).

20. Scanning system according to claim 11, characterized in that the hollow body intended for the scanning of drum-shaped original carriers is constructed as a hollow sphere or as part of a hollow sphere.

**Revendications**

1. Procédé pour le balayage opto-électronique par points et par lignes de documents opaques, qui sont disposés sur un support de documents transparent à la lumière, procédé caractérisé en ce que:

a) par balayage simultané en réflexion et en transparence, on obtient, à partir du même emplacement du document deux signaux de balayage, dont l'un constitue le signal d'image proprement dit ($U_B$) du document, tandis que l'autre signal de balayage est un signal d'identification ($U_Z$) pour les emplacements du document où des erreurs des amplitudes se produisent dans le signal d'image du fait de la lumière diffuse et/ou de l'ombre des bordures,

b) pour supprimer ces erreurs d'amplitude, la valeur d'amplitude du signal d'image ($U_B$) existant avant que se présente le signal d'identification ($U_Z$) est respectivement maintenue au moins pour la durée de l'erreur d'amplitude.

2. Procédé pour le balayage opto-électronique par points et par lignes de documents transparents qui sont disposés sur un support de documents transparent à la lumière, procédé caractérisé en ce que:

a) par balayage simultané en réflexion et en transparence, on obtient, à partir du même emplacement du document deux signaux de balayage, dont l'un constitue le signal d'image proprement dit ($U_B$) du document, tandis que l'autre signal de balayage est un signal d'identification ($U_Z$) pour les emplacements du document où des erreurs des amplitudes se produisent dans le signal d'image du fait de la lumière diffuse et/ou de l'ombre des bordures,

b) pour supprimer ces erreurs d'amplitude, le signal d'image ($U_B$) et le signal d'identification ($U_Z$) sont totalisés.

3. Procédé selon la revendication 1, caractérisé en ce que le signal d'image ($U_B$) et le signal d'identification ($U_Z$) sont totalisés et la valeur d'amplitude du signal total ($U_B'$) est maintenue au moins pour la durée de l'erreur d'amplitude.

4. Procédé selon la revendication 2, caractérisé en ce que la valeur d'amplitude du signal total ($U_B'$) existant avant que se présente le signal d'identification ($U_Z$) est maintenue au moins pour la durée de l'erreur d'amplitude.

5. Procédé pour le balayage de documents au trait selon la revendication 1, caractérisé en ce que:

a) à partir du signal d'identification mis sous forme numérique ($U_Z'$) on obtient une impulsion numérique de tension ($U_Z''$) qui a au moins la durée d'une erreur d'amplitude,

b) le signal d'identification mis sous forme numérique ($U_Z'$), le signal d'image mis sous forme numérique ($U_B'$), et l'impulsion numérique de tension ($U_Z''$) sont soumis à une combinaison OU pour supprimer les erreurs d'amplitude.

6. Dispositif de balayage pour le balayage op- to-électronique par point et par ligne de documents, qui sont disposés sur un support (5) de documents transparent à la lumière, dispositif caractérisé en ce qu'il comporte:

a) un premier moyen opto-électronique (14) de balayage pour obtenir un premier signal de balayage par balayage en réflexion, ce premier moyen étant disposé sur le côte du support (5) des documents tourné vers le faisceau lumineux (7') assurant le balayage,

b) un second moyen opto-électronique (15) de balayage pour obtenir un second signal de balayage par balayage en transparence, ce second moyen étant disposé sur le côté du support (5) des documents opposé au faisceau lumineux (7') assurant le balayage (fig. 1), l'un de ces signaux de balayage constituant le signal d'image ($U_B$) proprement dit du document (2), tandis que l'autre signal de balayage est un signal d'identification ($U_Z$) pour les emplacements du document où des erreurs d'amplitude se produisent dans le signal d'image ($U_B$) du fait de la lumière diffuse et/ou de l'ombre des bordures.

c) un circuit de compensation (18) pour supprimer les erreurs d'amplitude (fig. 2) ce circuit étant raccordé aux moyens opto-électroniques (14, 15).

7. Dispositif de balayage selon la revendication 6, caractérisé en ce que le circuit de compensation (18) comporte un étage totalisateur (34) pour former un signal total ($U_B'$) par totalisation du signal d'image ($U_B$) et du signal d'identification ($U_Z$).

8. Dispositif de balayage selon la revendication 7, caractérisé en ce que le circuit de compensation (18) comporte en outre les groupes constitutifs suivants:

a) un étage de temporisation (35) raccordé à l'étage totalisateur (34) pour retarder le signal total ($U_B'$),

b) un étage de mémoire (36), susceptible d'être commandé, pour les valeurs d'amplitudes du signal total ($U_B'$), cet étage étant en liaison avec l'étage de temporisation (35),

c) un moyen de mise en forme des impulsions (37, 38), recevant le signal d'identification ($U_Z$), pour produire des impulsions ($U_Z''$) de durée réglable à partir du signal d'identification ($U_Z$), et qui est raccordé à l'entrée de commande de l'étage de mémoire (36), l'étage de mémoire (36) maintenant pour la durée de l'impulsion ($U_Z''$) la valeur de l'amplitude du signal total ($U_B'$) existant avant que se présente le signal d'identification ($U_Z$).

9. Dispositif de balayage selon la revendication 8, caractérisé en ce que l'étage de mémoire (36) revêt la forme d'un circuit d'échantillonnage et de maintien.

10. Dispositif de balayage pour des documents au trait selon la revendication 6, caractérisé en ce que le circuit de compensation (18') (fig. 6) comporte les composant suivants:

a) des étages de niveaux (61, 62) recevant le signal d'image ($U_B$) et le signal d'identification ($U_Z$) pour mettre sous forme numérique le signal d'image ($U_B$) et le signal d'identification ($U_Z$)

b) un moyen de mise en forme des impulsions (37', 38') raccordé à l'étage de niveau (62) et recevant le signal d'identification mis sous forme numérique ($U_Z'$), pour engendrer des impulsions ($U_Z''$) de durée réglable,

c) une porte OU (63) reliée aux étages de niveaux (61, 62) et au moyen de mise en forme des impulsions (37', 38').

11. Dispositif de balayage selon une des revendications 6 à 10, caractérisé en ce que les moyens de balayage (14, 15 ou bien 14', 15') sont constitués par des dispositifs récepteurs de lumière pour la lumière de balayage, et revêtant la forme de corps creux réfléchissants avec des convertisseurs opto-électroniques (28, 29) pour produire les signaux de balayage.

12. Dispositif de balayage selon la revendication 11, caractérisé en ce que:

a) le corps creux comporte une ouverture (22 ou bien 23) jouant le rôle de surface réceptrice de la lumière et une ouverture d'entrée de la lumière (20 ou bien 21) pour la lumière de balayage en provenance du document (2),

b) la surface interne du corps creux, opposée à la surface réceptrice de la lumière (22 ou bien 23), constitue, au moins dans une zone recouverte par l'angle d'ouverture ($\beta$) de la surface réceptrice de la lumière (22 ou bien 23), un premier réflecteur (30 ou bien 31) réfléchissant de façon diffuse, tandis que la surface interne du corps creux contigue à la surface réceptrice de la lumière (22 ou bien 23) constitue un second réflecteur (32 ou bien 33), (fig. 1),

c) les réflecteurs (30, 31; 32, 33) sont disposés l'un par rapport à l'autre de façon que la lumière incidente soit respectivement orientée sur le réflecteur placé à l'opposé.

d) le premier réflecteur (30 ou bien 31) est conformé de façon telle, et orienté de façon telle par rapport à la surface réceptrice de la lumière (22 ou bien 23), qu'une grande partie de la lumière diffuse tombe sur la surface réceptrice de la lumière (22 ou bien 23),

e) l'ouverture d'entrée de la lumière (20 ou bien 22) est prévue de façon telle et orientée de façon telle par rapport à la surface réceptrice de la lumière (22 ou bien 23) que la lumière de balayage ne tombe pas directement sur la surface réceptrice de la lumière (22 ou bien 23), mais est au moins une fois réfléchie de façon diffuse par le premier réflecteur (30 ou bien 31).

13. Dispositif de balayage selon la revendication 12, caractérisé en ce que le corps creux comporte en supplément pour le balayage en réflexion une ouverture d'entrée de la lumière (19) pour le faisceau lumineux assurant le balayage (7').

14. Dispositif de balayage selon la revendication 12, caractérisé en ce que le second réflecteur (32 ou bien 33) est un réflecteur diffusant.

15. Dispositif de balayage selon la revendication 12, caractérisé en ce que le second réflecteur (32 ou bien 33) est un miroir.

16. Dispositif de balayage selon la revendication 11, caractérisé en ce que la surface réceptrice de la lumière (22 ou bien 23) est constituée par une surface terminale d'un convertisseur optique de section transversale (24 ou bien 25), à l'autre surface terminale duquel est couplé le couvertisseur opto-électronique (28 ou bien 29).

17. Dispositif de balayage selon la revendication 11, caractérisé en ce que:

a) le corps creux comporte une ouverture d'entrée de la lumière (50 ou bien 52) pour la lumière de balayage en provenance du document (2)

b) la surface interne du corps creux constitue une surface réceptrice de la lumière (53), (fig. 5).

18. Dispositif de balayage selon la revendication 17, caractérisé en ce que:

a) la surface réceptrice de la lumière (53) est constituée par l'une des surfaces terminales d'une pluiralité de fibres conductrices de la lumière (54), les normales à ces surfaces terminales étant orientées en direction de la lumière de balayage incidente,

b) les autres surfaces terminales (57) des fibres conductrices de la lumière (54) sont couplées au convertisseur opto-électronique (28 ou bien 29).

19. Dispositif de balayage selon la revendication 11, caractérisé en ce que le corps creux, en vue du balayage de support de documents plan (1), revêt la forme d'un cylindre creux ou bien d'une partie d'un cylindre creux (fig. 1 et 5).

20. Dispositif de balayage selon la revendication 11, caractérisé en ce que le corps crux, en vue du balayage de support de documents en forme de tambour, revêt la forme d'une sphère creuse ou bien d'une partie d'une sphère creuse.

Fig. 1

Kompensations Schaltung

$U_B^*$

Fig. 2

Speicher-Stufe

$U_B^*$

Verzögerungs-Stufe

Impulsformer-Stufe

$\tau_1$  $\tau_2$

$U_B''$  $U_Z''$

$U_B'$  $U_Z'$

$U_B$  $U_Z$

Fig. 3a

Fig. 3b

Fig. 4a

Fig. 4b

Fig. 5

Pegel-Stufe

18'

16

17

$U_B$ 61 $U'_B$ $U^*_B$

$U_Z$ 62 $U'_Z$ 37 38 $\tau_2$ $U''_Z$ 63

**Fig. 6**

Impulsformer-
Stufe

Verzögerungs-Stufe

$U_B$

W

**A)** 46 46

S

t

$U'_B$

W

**B)**

S

t

$U'_Z$

W

**C)**

S

t

$U''_Z$

W

**D)**

S

$\tau_2$ $\tau_2$ t

$U^*_B$

W

**E)**

S

t

**Fig. 7**